# EUROPEAN PATENT SPECIFICATION

(11) **EP 2 366 871 B1**
(45) Date of publication and mention of the grant of the patent: **11.05.2016**
(21) Application number: 10156796.4
(22) Date of filing: 17.03.2010
(51) Int. Cl.: F01D 5/14, F01D 5/18, F01D 9/04, F02K 3/04

(54) **Method and apparatus for a structural outlet guide vane**
Verfahren und Vorrichtung für eine strukturelle Auslassleitschaufel
Procédé et appareil pour conduit d'aube de sortie structurelle

(43) Date of publication of application: 21.09.2011
(73) Proprietor: General Electric Company, Schenectady, NY 12345 (US)
(72) Inventor: Shim, Dong-Jin, Cohoes, NY 12047 (US); Finn, Scott, Niskayuna, NY 12309 (US); Karafillis, Apostolos Pavlos, Winchester, MA 01890 (US); Hasting, William Howard, Cincinnati, OH 45202 (US); Hegeman, Arjan, Cincinnati, OH 45224 (US)
(74) Representative: Williams, Andrew Richard

(56) References cited:
- EP-A1- 0 813 956
- EP-A1- 1 596 036
- EP-A2- 1 908 920
- EP-A2- 1 983 160

## Description

### BACKGROUND OF THE INVENTION

This invention relates generally to gas turbine engines, and more particularly, to a gas turbine engine vane and a method of fabricating the same.

At least one known gas turbine engine assembly includes a fan assembly that is mounted upstream from a core gas turbine engine. During operation, airflow discharged from the fan assembly is channeled downstream to the core gas turbine engine where the airflow is further compressed. The compressed airflow is then channeled into a combustor, mixed with fuel, and ignited to generate hot combustion gases. The combustion gases are then channeled to a turbine which extracts energy from the combustion gases for powering the compressor, as well as producing useful work to propel an aircraft in flight.

To facilitate channeling the airflow from the fan assembly to the core gas turbine engine, at least one known gas turbine engine assembly includes an outlet guide vane assembly. The outlet guide vane assembly is configured to redirect the circumferentially flowing air discharged from the fan assembly into a substantially axial direction prior to the fan flow being channeled into the core gas turbine engine. In addition to redirecting the fan airflow, the outlet guide vane assembly also provides structural stiffness to the fan frame. More specifically, outlet guide vane assemblies generally include a plurality of outlet guide vanes that are coupled to the fan frame. To provide the necessary structural stiffness the fan frame, the known outlet guide vanes are forged as substantially solid vanes using a metallic material.

However, because some known outlet guide vanes are substantially solid, they increase the overall weight of the gas turbine engine assembly, and may also cause a reduction in fuel efficiency. Other known guide vanes have attempted to use a lighter filler material surrounded by a metallic portion but while lighter, these vanes are still too heavy.

EP 1908920 A2 discloses an outlet guide vane for a gas turbine engine.

### BRIEF SUMMARY OF THE INVENTION

In one aspect, a method for assembling an outlet guide vane is provided according to claim 8.

In another aspect, an outlet guide vane for a gas turbine engine is provided according to claim 1.

### BRIEF DESCRIPTION OF THE DRAWING

There follows a detailed description of embodiments of the invention by way of example only with reference to the accompanying drawings, in which:
Figure 1 is a schematic illustration of an exemplary gas turbine engine assembly;
Figure 2 is a perspective view of a fan frame assembly that includes a plurality of outlet guide vanes that may be utilized with the gas turbine engine assembly shown in Figure 1;
Figure 3 is a perspective view of an outlet guide vane that may be used with the fan frame assembly shown in Figure 2;

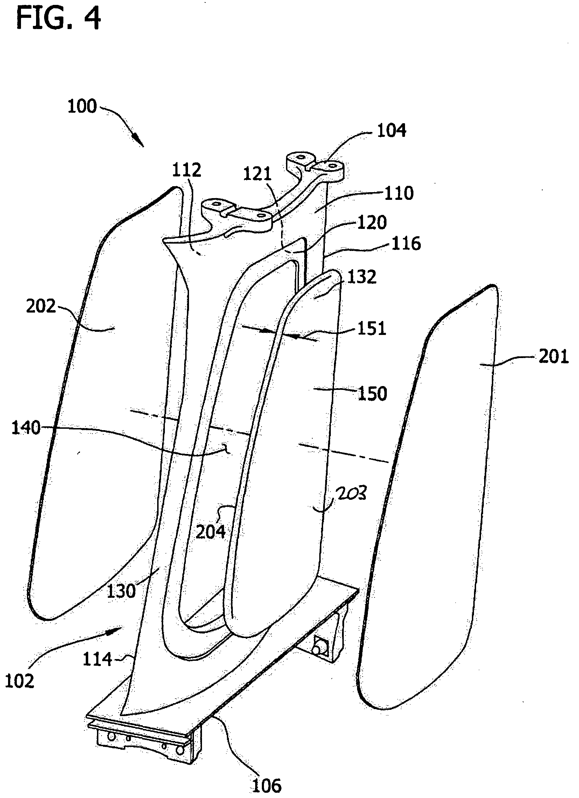

Figure 4 is an exploded view of the outlet guide vane of Figure 3; and

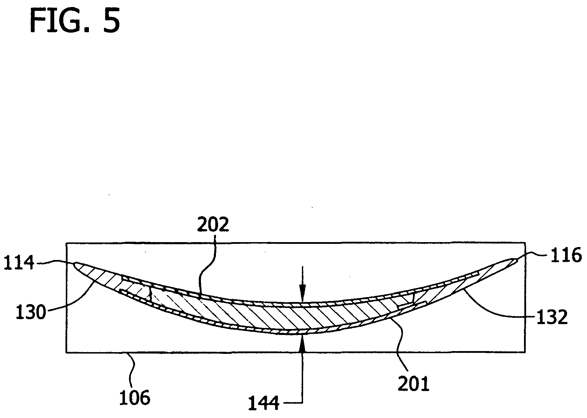

Figure 5 is a cross-sectional view of the outlet guide vane shown in Figure 3.

### DETAILED DESCRIPTION OF THE INVENTION

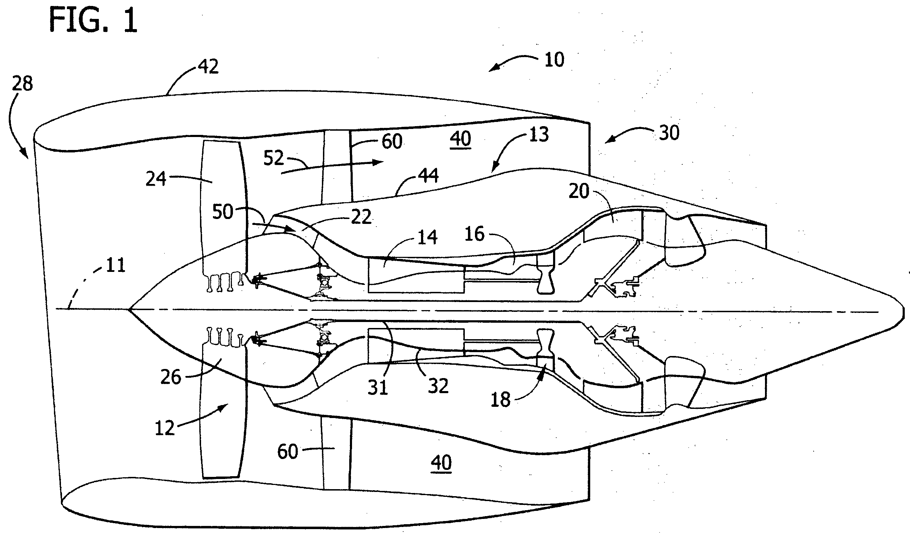

Figure 1 is a schematic illustration of an exemplary gas turbine engine assembly 10 having a longitudinal axis 11. Gas turbine engine assembly 10 includes a fan assembly 12 and a core gas turbine engine 13. Core gas turbine engine 13 includes a high pressure compressor 14, a combustor 16, and a high pressure turbine 18. In the exemplary embodiment, gas turbine engine assembly 10 also includes a low pressure turbine 20, and a multi-stage booster compressor 22.

Fan assembly 12 includes an array of fan blades 24 extending radially outward from a rotor disk 26. Gas turbine engine assembly 10 has an intake side 28 and an exhaust side 30. Fan assembly 12, booster 22, and turbine 20 are coupled together by a first rotor shaft 31, and compressor 14 and turbine 18 are coupled together by a second rotor shaft 32.

In operation, air flows through fan assembly 12 and a first portion of the airflow is channeled through booster 22. The compressed air that is discharged from booster 22 is channeled through compressor 14 wherein the airflow is further compressed and delivered to combustor 16. Hot products of combustion (not shown in Figure 1) from combustor 16 are utilized to drive turbines 18 and 20, and turbine 20 is utilized to drive fan assembly 12 and booster 22 by way of shaft 31. Gas turbine engine assembly 10 is operable at a range of operating conditions between design operating conditions and off-design operating conditions.

A second portion of the airflow discharged from fan assembly 12 is channeled through a bypass duct 40 to bypass a portion of the airflow from fan assembly 12 around core gas turbine engine 13. More specifically, bypass duct 40 extends between a fan casing or shroud 42 and splitter 44. Accordingly, a first portion 50 of the airflow from fan assembly 12 is channeled through booster 22 and then into compressor 14 as described above and a second portion 52 of the airflow from fan assembly 12 is channeled through bypass duct 40 to provide thrust for an aircraft, for example. Gas turbine engine assembly 10 also includes a fan frame assembly 60 to provide structural support for fan assembly 12 and is also utilized to coupled fan assembly 12 to core gas turbine engine 13.

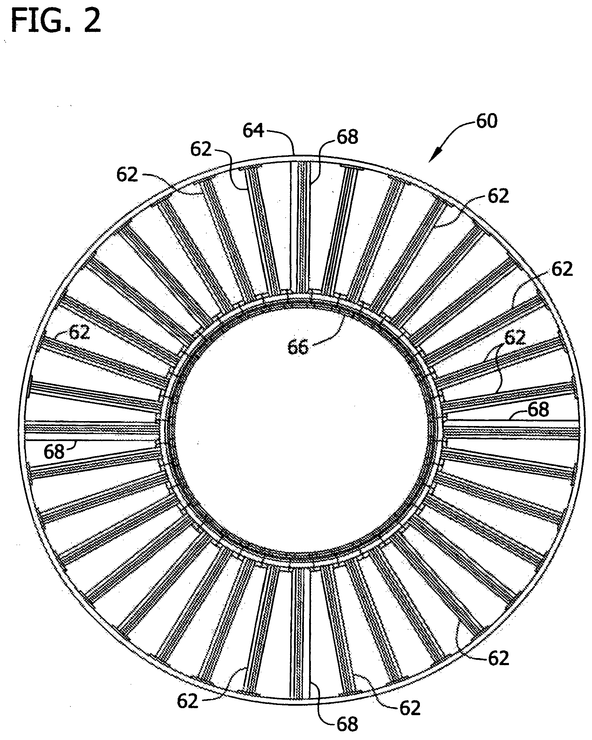

Figure 2 is a front perspective view of fan frame assembly 60. Fan frame assembly 60 includes a plurality of outlet guide vanes 62 that extend substantially radially between a radially outward mounting flange 64 and a radially inward mounting flange 66 and are circumferentially-spaced around within bypass duct 40. Fan frame assembly 60 also includes a plurality of struts 68 that are coupled between radially outward mounting flange 64 and radially inward mounting flange 66. In one embodiment, fan frame assembly 60 is fabricated in arcuate segments in which flanges 64 and 66 are coupled to outlet guide vanes 62 and struts 68. In the exemplary embodiment, outlet guide vanes 62 and struts 68 are coupled coaxially within bypass duct 40. Specifically, outlet guide vanes 62 and struts 68 each coupled between flanges 64 and 66 in the same axial location as shown in Figure 2. Optionally, outlet guide vanes 62 may be coupled downstream from struts 68 within bypass duct 40.

Fan frame assembly 60 is one of the various frame and support assemblies of gas turbine engine assembly 10 that are used to facilitate maintaining an orientation of various components within gas turbine engine assembly 10. More specifically, such frame and support assemblies interconnect stationary components and provide rotor bearing supports. Fan frame assembly 60 is coupled downstream from fan assembly 12 within bypass duct 40 such that outlet guide vanes 62 and struts 68 are circumferentially-spaced around the outlet of fan assembly 12 and extend across the airflow path discharged from fan assembly 12.

In the exemplary embodiment, outlet guide vane 100 includes an airfoil 102 that is coupled between a radially outward flange 104 and a radially inward flange 106. In the exemplary embodiment, airfoil 102, radially outward flange 104, and radially inward flange 106 are cast or forged as a unitary outlet guide vane 100. Optionally, radially outward flange 104 and radially inward flange 106 may be coupled to airfoil 102 using a welding or brazing technique, for example. Although in the exemplary embodiment radially outward and radially inward flanges 104 and 106 are fabricated from metal, in other embodiments radially outward and radially inward flanges 104 and 106 may be fabricated from a composite material. In still other embodiments, airfoil 102 may be fabricated partially or entirely from a composite material and may have a metallic strengthener attached to it.

Airfoil 102 includes a first sidewall 110 and a second sidewall 112. In one embodiment, either first and/or second sidewalls 110 and/or 112 may be contoured to improve aerodynamic performance. In the exemplary embodiment, first sidewall 110 is convex and defines a suction side of airfoil 102, and second sidewall 112 is concave and defines a pressure side of airfoil 102. Sidewalls 110 and 112 are joined at a leading edge 114 and at an axially-spaced trailing edge 116 of airfoil 102. More specifically, airfoil trailing edge 116 is spaced chordwise and downstream from airfoil leading edge 114. First and second sidewalls 110 and 112, respectively, extend longitudinally or radially outward in span from radially inner flange 106 to radially outer flange 104. In the exemplary embodiment, at least a portion of outlet guide vane 100 is fabricated utilizing a metallic material such as, but not limited to, titanium, aluminum, and/or a Metal Matrix Composite (MMC) material.

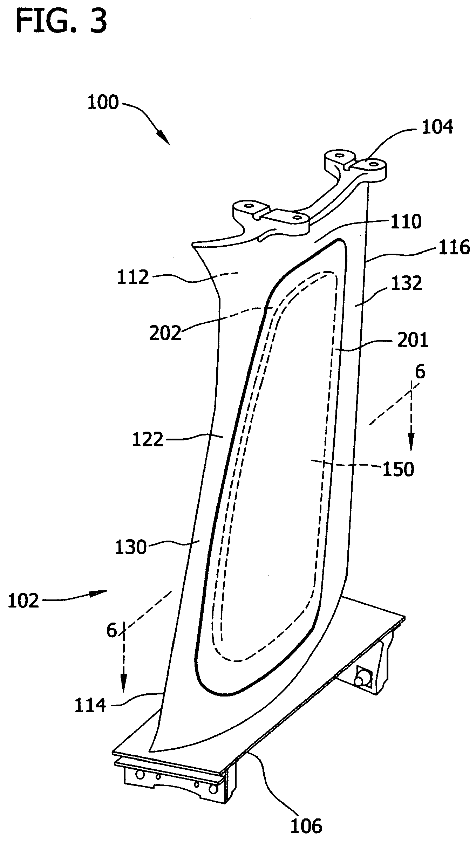

As shown in Figure 3, airfoil 102 includes a first assembly surface 120, a second assembly surface 121, a leading edge portion or spar 130 and a trailing edge portion or spar 132. More specifically, airfoil 102 has a profile that tapers outwardly from leading edge 114 at least partially towards trailing edge 116 and also tapers outwardly from trailing edge 116 at least partially towards leading edge 114. The profile then tapers inwardly from the leading edge portion 130 and from trailing edge portion 132 to define first and second assembly surfaces 120 and 121. The profile then tapers further inwardly to form a cavity 140 circumscribed by first assembly surface 120 on one side of the airfoil and circumscribed by second assembly surface 121 on the other side of the airfoil.

In the exemplary embodiment, cavity 140 is sized to receive a filler 150 comprising a first side 203 and a second side 204 that is a honeycombed material. That is, filler 150 has a thickness 151 that is smaller than the thickness 144 of cavity 140 such that filler 150 is not flush with a leading edge portion 130 and/or trailing edge portion 132 when positioned within cavity 140. Two laminate portions 201 and 202 are sized to overlay the filler 150 between leading edge portion 130 and trailing edge portion 132. Laminate portion 201 is coupled to first side 203 and first assembly surface 120 such that laminate portion 201 is substantially flush with both leading edge portion 130 and trailing edge portion 132 and laminate portion 202 is coupled to second side 204 and second assembly surface 121 such that laminate portion 202 is also substantially flush with both leading edge portion 130 and trailing edge portion 132. In some embodiments, a protective coating 122, such as polyurethane, may be applied to the outlet guide vane 100.

During fabrication, of outlet guide vane 100, outlet guide vane 100 is cast or forged to include leading edge portion 130, trailing edge portion 132, and inward and outward flange 104 and 106. Filler 150 is then coupled within cavity 140 as described above.

Then a laminate portion 201 is coupled to first side 203 and laminate portion 202 is coupled to second side 204.

Described herein, is a gas turbine engine wherein at least some known outlet guide vanes are replaced with an outlet guide vane having a substantially hollow interior portion filled with a relatively lightweight material sandwiched between two laminate sheets. As such, the exemplary outlet guide vanes described herein reduce the overall weight of the gas turbine engine assembly while still maintaining structural integrity thus achieving the very challenging engine weight goals for new applications.

More specifically, the outlet guide vane 100 described herein includes two spars that form the airfoil portion of the outlet guide vane 100. The area between the spars is filled with a honeycombed material to add rigidity to the airfoil, and then sandwiched between two laminate sheets.

This written description uses examples to disclose the invention, including the best mode, and also to enable an person skilled in the art to make and use the invention. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. An outlet guide vane (62,100) for a gas turbine engine, said outlet guide vane comprising:
a first flange (106);
a second flange (104) positioned radially outwardly from said first flange;
an airfoil (102) extending between said first and second flanges and coupled thereto, the airfoil comprising a leading edge (114), a trailing edge (116), a leading edge portion (130) and a trailing edge portion (132), said leading edge portion and said trailing edge portion fabricated from a first material;
wherein said airfoil (102) has a profile that tapers outwardly from said leading edge (114) at least partially towards said trailing edge (116) and that tapers outwardly from said trailing edge (116) at least partially towards said leading edge (114);
a cavity (140);
a filler portion (150) coupled in the cavity (140), the filler portion comprising a first side (203) and a second side (204), the filler portion fabricated from a second material, said second material different from said first material;
a first skin (201) coupled to the first side (203), the first skin fabricated from a composite material; and
a second skin (202) coupled to the second side (204), the second skin fabricated from a composite material;
**characterised in that** the profile of said airfoil (102) tapers inwardly from both of said leading edge portion (130) and said trailing edge portion (132) to define a first assembly surface (120) and a second assembly surface (121), wherein said profile then tapers further inwardly to form the cavity, wherein said first assembly surface (120) circumscribes said cavity (140) on one side of said airfoil (102) and said second assembly surface (121) circumscribes said cavity (140) on the other side of said airfoil (102), wherein said first skin (201) is coupled to said first assembly surface (120) such that said first skin is flush with both said leading edge portion (130) and said trailing edge portion (132), and said second skin (202) is coupled to said second assembly surface (121) such that said second skin (202) is flush with both said leading edge portion (130) and said trailing edge portion (132).

2. An outlet guide vane (62,100) in accordance with Claim 1, wherein said first material comprises a metallic material and said second material comprises a honeycomb material.

3. An outlet guide vane (62,100) in accordance with Claim 1 or 2, wherein at least one of the radially inward flange (106), the radially outward flange (104), and the airfoil (102) comprises a composite material.

4. An outlet guide vane (62,100) in accordance with any of the preceding Claims, wherein the first material is aluminum.

5. An outlet guide vane (62,100) in accordance with any of the preceding Claims, further comprising a protective coating (122) applied to the outlet guide vane.

6. An outlet guide vane (62,100) in accordance with any of the preceding Claims, wherein said first flange (106), said second flange (104), and said airfoil (102) comprise at least one of a cast unitary outlet guide vane and a forged unitary outlet guide vane.

7. A gas turbine engine assembly (10) comprising:
a core gas turbine engine (13);
a fan assembly (12) disposed upstream from said core gas turbine engine, said fan assembly comprising a plurality of fan blades; and
an outlet guide vane assembly comprising a plurality of outlet guide vanes (62,100) being according to any one of claims 1 to 6.

8. A method for assembling an outlet guide vane (62), said method comprising:
providing an outlet guide vane (62), the outlet guide vane (62) comprising:
a first flange (106);
a second flange (104) positioned radially outwardly from said first flange;
an airfoil (102) extending between said first and second flanges and coupled thereto, said airfoil comprising a leading edge (114), a trailing edge (116), a leading edge portion (130) and a trailing edge portion (132), said leading edge portion and said trailing edge portion fabricated from a first material;
wherein said airfoil (102) has a profile that tapers outwardly from said leading edge (114) at least partially towards said trailing edge (116) and that tapers outwardly from said trailing edge (116) at least partially towards said leading edge (114);
a cavity (140); and the method further comprising
coupling a filler portion (150) within the cavity (140), the filler portion (150) including a first side (203) and a second side (204) the filler portion fabricated from a second material, said second material different from said first material;
**characterised in that**: the profile of said airfoil (102) tapers inwardly from said leading edge portion (130) and said trailing edge portion (132) to define a first assembly surface (120) and a second assembly surface (121), wherein said profile then tapers further inwardly to form the cavity, wherein said first assembly surface (120) circumscribes the cavity (140) on one side of said airfoil (102) and said second assembly surface (121) circumscribes said cavity (140) on the other side of said airfoil (120);
coupling a first skin (201) to the first side (203) and the first assembly surface (120) such that said first skin is flush with both said leading edge portion (130) and said trailing edge portion (132); and
coupling a second skin (202) to the second side (204) and the second assembly surface (121 such that said second skin (202) is flush with both said leading edge portion (130) and said trailing edge portion (132), wherein at least one of the first skin and the second skin are fabricated from a composite material.

9. A method in accordance with Claim 8, wherein providing the outlet guide vane comprises providing an outlet guide vane comprising a metallic material.

10. A method in accordance with-Claim 8 or 9, wherein providing the outlet guide vane comprises providing an outlet guide vane comprising a composite material.

11. A method in accordance with any of Claims 8 to 10, further comprising applying a protective coating to the outlet guide vane (62).

12. A method in accordance with any of Claims 8 to 11, wherein coupling the filler portion (150) comprises coupling a filler portion (150) comprising a honeycomb material.

## Patentansprüche

1. Auslassleitschaufel (62, 100) für einen Gasturbinenmotor, wobei die Auslassleitschaufel umfasst:
einen ersten Flansch (106);
einen zweiten Flansch (104), der vom ersten Flansch radial nach außen positioniert ist;
einen Tragflügel (102), der sich zwischen dem ersten und zweiten Flansch erstreckt und damit verbunden ist, wobei der Tragflügel eine Vorderkante (114), eine Hinterkante (116), einen vorderen Kantenteil (130) und einen hinteren Kantenteil (132) umfasst, wobei der vordere Kantenteil und der hintere Kantenteil aus einem ersten Material hergestellt sind;
wobei der Tragflügel (102) ein Profil hat, das sich nach außen von der Vorderkante (114) zumindest teilweise zur Hinterkante (116) hin verjüngt und das sich von der Hinterkante (116) nach außen zumindest teilweise zur Vorderkante (114) hin verjüngt;
einen Hohlraum (140);
einen Füllteil (150), der mit dem Hohlraum (140) verbunden ist, wobei der Füllteil eine erste Seite (203) und eine zweite Seite (204) umfasst, wobei der Füllteil aus einem zweiten Material hergestellt ist, wobei das zweite Material sich vom ersten Material unterscheidet;
eine erste Haut (201), die mit der ersten Seite (203) verbunden ist, wobei die erste Haut aus einem Verbundmaterial hergestellt ist; und
eine zweite Haut (202), die mit der zweiten Seite (204) verbunden ist, wobei die zweite Haut aus einem Verbundmaterial hergestellt ist;
**dadurch gekennzeichnet, dass** das Profil des Tragflügels (102) sowohl vom vorderen Kantenteil (130) wie auch vom hinteren Kantenteil (132) aus sich nach innen verjüngt, um eine erste Baugruppenfläche (120) und eine zweite Baugruppenfläche (121) zu definieren, wobei das Profil sich dann weiter nach innen verjüngt, um den Hohlraum zu bilden, wobei die erste Baugruppenfläche (120) den Hohlraum (140) auf einer Seite des Tragflügels (102) abgrenzt und die zweite Baugruppenfläche (121) den Hohlraum (140) auf der anderen Seite des Tragflügels (102) abgrenzt, wobei die erste Haut (201) mit der ersten Baugruppenfläche (120) derart verbunden ist, dass die erste Haut bündig sowohl mit vorderen Kantenteil (130) als auch mit dem hinteren Kantenteil (132) ist, und die zweite Haut (202) ist mit der zweiten Baugruppenfläche (121) derart verbunden, dass die zweite Haut (202) bündig sowohl mit dem vorderen Kantenteil (130) als auch mit dem hinteren Kantenteil (132) ist.

2. Auslassleitschaufel (62, 100) nach Anspruch 1, wobei das erste Material ein metallisches Material umfasst und das zweite Material ein Wabenmaterial umfasst.

3. Auslassleitschaufel (62, 100) nach Anspruch 1 oder 2, wobei mindestens ein Element aus dem radial innen angeordneten Flansch (106), dem radial außen angeordneten Flansch (104) und dem Tragflügel (102) ein Verbundmaterial umfasst.

4. Auslassleitschaufel (62, 100) nach einem der vorherigen Ansprüche, wobei das erste Material Aluminium ist.

5. Auslassleitschaufel (62, 100) nach einem der vorherigen Ansprüche, die ferner eine Schutzschicht (122) umfasst, die auf die Auslassleitschaufel aufgetragen ist.

6. Auslassleitschaufel (62, 100) nach einem der vorherigen Ansprüche, wobei der erste Flansch (106), der zweite Flansch (104) und der Tragflügel (102) mindestens ein Element aus einer gegossenen einheitlichen Auslassleitschaufel und einer geschmiedeten einheitlichen Auslassleitschaufel umfassen.

7. Baugruppe (10) eines Gasturbinenmotors, umfassend:
einen Kerngasturbinenmotor (13);
eine Lüftergruppe (12), die oberhalb des Kerngasturbinenmotors angeordnet ist, wobei die Lüftergruppe mehrere Lüfterflügel umfasst; und
eine Auslassleitschaufelgruppe, die mehrere Auslassleitschaufeln (62, 100) nach einem der Ansprüche 1 bis 6 umfasst.

8. Verfahren zum Aufbauen einer Auslassleitschaufel (62), wobei das Verfahren Folgendes umfasst:
Bereitstellen einer Auslassleitschaufel (62), wobei die Auslassleitschaufel (62) umfasst:
einen ersten Flansch (106);
einen zweiten Flansch (104), der vom ersten Flansch radial nach außen positioniert ist;
einen Tragflügel (102), der sich zwischen dem ersten und zweiten Flansch erstreckt und damit verbunden ist, wobei der Tragflügel eine Vorderkante (114), eine Hinterkante (116), einen vorderen Kantenteil (130) und einen hinteren Kantenteil (132) umfasst, wobei der vordere Kantenteil und der hintere Kantenteil aus einem ersten Material hergestellt sind;
wobei der Tragflügel (102) ein Profil hat, das sich nach außen von der Vorderkante (114) zumindest teilweise zur Hinterkante (116) hin verjüngt und das sich von der Hinterkante (116) nach außen zumindest teilweise zur Vorderkante (114) hin verjüngt;
einen Hohlraum (140); und wobei das Verfahren ferner umfasst:
Verbinden eines Füllteils (150) mit dem Hohlraum (140), wobei der Füllteil (150) eine erste Seite (203) und eine zweite Seite (204) umfasst, wobei der Füllteil aus einem zweiten Material hergestellt ist, wobei das zweite Material sich vom ersten Material unterscheidet;
**dadurch gekennzeichnet, dass**: das Profil des Tragflügels (102) sich nach innen vom vorderen Kantenteil (130) und dem hinteren Kantenteil (132) verjüngt, um eine erste Baugruppenfläche (120) und eine zweite Baugruppenfläche (121) zu definieren, wobei das Profil dann sich weiter nach innen verjüngt, um den Hohlraum zu bilden, wobei die erste Baugruppenfläche (120) den Hohlraum (140) auf einer Seite des Tragflügels (102) abgrenzt und die zweite Baugruppenfläche (121) den Hohlraum (140) auf der anderen Seite des Tragflügels (120) abgrenzt;
Verbinden einer ersten Haut (201) derart mit der ersten Seite (203) und der ersten Baugruppenfläche (120), dass die erste Haut bündig sowohl mit dem vorderen Kantenteil (130) wie auch mit dem hinteren Kantenteil (132) ist; und
Verbinden einer zweiten Haut (202) derart mit der zweiten Seite (204) und der zweiten Baugruppenfläche (121), dass die zweite Haut (202) bündig sowohl mit dem vorderen Kantenteil (130) und dem hinteren Kantenteil (132) ist, wobei mindestens ein Element aus der ersten Haut und der zweiten Haut aus einem Verbundmaterial hergestellt ist.

9. Verfahren nach Anspruch 8, wobei das Bereitstellen der Auslassleitschaufel das Bereitstellen einer Auslassleitschaufel umfasst, die ein metallisches Material umfasst.

10. Verfahren nach Anspruch 8 oder 9, wobei das Bereitstellen der Auslassleitschaufel das Bereitstellen einer Auslassleitschaufel umfasst, die ein Verbundmaterial umfasst.

11. Verfahren nach einem der Ansprüche 8 bis 10, das ferner das Auftragen einer Schutzbeschichtung auf die Auslassleitschaufel (62) umfasst.

12. Verfahren nach einem der Ansprüche 8 bis 11, wobei das Anschließen des Füllteils (150) das Anschließen eines Füllteils (150) umfasst, der ein Wabenmaterial umfasst.

## Revendications

1. Aube directrice de sortie (62, 100) pour un moteur à turbine à gaz, ladite aube directrice de sortie comprenant :
une première bride (106) ;
une seconde bride (104) positionnée radialement vers l'extérieur de ladite première bride ;
un profil aérodynamique (102) s'étendant entre ladite première et ladite seconde brides et couplé à celles-ci, le profil aérodynamique comprenant un bord d'attaque (114), un bord de fuite (116), une partie de bord d'attaque (130) et une partie de bord de fuite (132), ladite partie de bord d'attaque et ladite partie de bord de fuite étant constituées d'un premier matériau ;
dans laquelle ledit profil aérodynamique (102) a un profil qui s'amincit vers l'extérieur depuis ledit bord d'attaque (114) au moins partiellement vers ledit bord de fuite (116) et qui s'amincit vers l'extérieur dudit bord de fuite (116) au moins en partie vers ledit bord d'attaque (114) ;
une cavité (140) ;
une partie de remplissage (150) couplée dans la cavité (140), la partie de remplissage comprenant un premier côté (203) et un second côté (204), la partie de remplissage étant constituée d'un second matériau, ledit second matériau étant différent dudit premier matériau ;
une première peau (201) couplée au premier côté (203), la première peau étant constituée d'un matériau composite ; et
une seconde peau (202) couplée au second côté (204), la seconde peau étant constituée d'un matériau composite ;
**caractérisée en ce que** le profil dudit profil aérodynamique (102) s'amincit vers l'intérieur depuis à la fois ladite partie de bord d'attaque (130) et ladite partie de bord de fuite (132) pour définir une première surface d'assemblage (120) et une seconde surface d'assemblage (121), dans laquelle ledit profil s'amincit ensuite en outre vers l'intérieur pour former la cavité, dans laquelle ladite première surface d'assemblage (120) circonscrit ladite cavité (140) sur un côté dudit profil aérodynamique (102) et ladite seconde surface d'assemblage (121) circonscrit ladite cavité (140) sur l'autre côté dudit profil aérodynamique (102), dans laquelle ladite première peau (201) est couplée à ladite première surface d'assemblage (120) de sorte que ladite première peau soit de niveau avec à la fois ladite partie de bord d'attaque (130) et ladite partie de bord de fuite (132), et ladite seconde peau (202) est couplée à ladite seconde surface d'assemblage (121) de sorte que ladite seconde peau (202) soit de niveau avec à la fois ladite partie de bord d'attaque (130) et ladite partie de bord de fuite (132) .

2. Aube directrice de sortie (62, 100) selon la revendication 1, dans laquelle ledit premier matériau comprend un matériau métallique et ledit second matériau comprend un matériau en nid d'abeille.

3. Aube directrice de sortie (62, 100) selon la revendication 1 ou la revendication 2, dans laquelle au moins l'une ou l'autre de la bride radialement interne (106), de la bride radialement externe (104) et du profil aérodynamique (102) comprend un matériau composite.

4. Aube directrice de sortie (62, 100) selon l'une quelconque des revendications précédentes, dans laquelle le premier matériau est de l'aluminium.

5. Aube directrice de sortie (62, 100) selon l'une quelconque des revendications précédentes, comprenant en outre un revêtement protecteur (122) appliqué à l'aube directrice de sortie.

6. Aube directrice de sortie (62, 100) selon l'une quelconque des revendications précédentes, dans laquelle ladite première bride (106), ladite seconde bride (104) et ledit profil aérodynamique (102) comprennent au moins l'une ou l'autre d'une aube directrice de sortie unitaire coulée et d'une aube directrice de sortie unitaire forgée.

7. Ensemble de moteur à turbine à gaz (10) comprenant :
un moteur à turbine à gaz central (13) ;
un ensemble de soufflante (12) disposé en amont dudit moteur à turbine à gaz central, ledit ensemble de soufflante comprenant une pluralité de pales de soufflante ; et
un ensemble d'aubes directrices de sortie comprenant une pluralité d'aubes directrices de sortie (62, 100) qui sont conformes à l'une quelconque des revendications 1 à 6.

8. Procédé d'assemblage d'une aube directrice de sortie (62), ledit procédé comprenant les étapes consistant à :
fournir une aube directrice de sortie (62), l'aube directrice de sortie (62) comprenant :
une première bride (106) ;
une seconde bride (104) positionnée radialement vers l'extérieur de ladite première bride ;
un profil aérodynamique (102) s'étendant entre ladite première et ladite seconde brides et couplé à celles-ci, ledit profil aérodynamique comprenant un bord d'attaque (114), un bord de fuite (116), une partie de bord d'attaque (130) et une partie de bord de fuite (132), ladite partie de bord d'attaque et ladite partie de bord de fuite étant constituées d'un premier matériau ;
dans lequel ledit profil aérodynamique (102) a un profil qui s'amincit vers l'extérieur depuis ledit bord d'attaque (114) au moins partiellement vers ledit bord de fuite (116) et qui s'amincit vers l'extérieur dudit bord de fuite (116) au moins en partie vers ledit bord d'attaque (114) ;
une cavité (140) ; et le procédé comprenant en outre les étapes consistant à :
coupler une partie de remplissage (150) dans la cavité (140), la partie de remplissage (150) comprenant un premier côté (203) et un second côté (204), la partie de remplissage étant constituée d'un second matériau, ledit second matériau étant différent dudit premier matériau ;
**caractérisé en ce que** le profil dudit profil aérodynamique (102) s'amincit vers l'intérieur depuis à la fois ladite partie de bord d'attaque (130) et ladite partie de bord de fuite (132) pour définir une première surface d'assemblage (120) et une seconde surface d'assemblage (121), dans lequel ledit profil s'amincit ensuite en outre vers l'intérieur pour former la cavité, dans lequel ladite première surface d'assemblage (120) circonscrit ladite cavité (140) sur un côté dudit profil aérodynamique (102) et ladite seconde surface d'assemblage (121) circonscrit ladite cavité (140) sur l'autre côté dudit profil aérodynamique (120) ;
coupler une première peau (201) au premier côté (203) et à la première surface d'assemblage (120) de sorte que ladite première peau soit de niveau avec à la fois ladite partie de bord d'attaque (130) et avec ladite partie de bord de fuite (132) ; et
coupler une seconde peau (202) au second côté (204) et à la seconde surface d'assemblage (121) de sorte que ladite seconde peau (202) soit de niveau avec à la fois ladite partie de bord d'attaque (130) et ladite partie de bord de fuite (132), dans lequel au moins l'une de la première peau et de la seconde peau soit constituée d'un matériau composite.

9. Procédé selon la revendication 8, dans lequel la fourniture de l'aube directrice de sortie comprend la fourniture d'une aube directrice de sortie comprenant un matériau métallique.

10. Procédé selon la revendication 8 ou la revendication 9, dans lequel la fourniture de l'aube directrice de sortie comprend la fourniture d'une aube directrice de sortie comprenant un matériau composite.

11. Procédé selon l'une quelconque des revendications 8 à 10, comprenant en outre l'application d'un revêtement protecteur à l'aube directrice de sortie (62).

12. Procédé selon l'une quelconque des revendications 8 à 11, dans lequel le couplage de la partie de remplissage (150) comprend le couplage d'une partie de remplissage (150) comprenant un matériau en nid d'abeille.
